Europäisches Patentamt

European Patent Office

Office européen des brevets

(11) Publication number: **0 509 568 A2**

# EUROPEAN PATENT APPLICATION

(21) Application number: **92200810.7**

(22) Date of filing: **20.03.92**

(51) Int. Cl.⁵: **F16L 25/02**

(30) Priority: **15.04.91 IT MI911031**

(43) Date of publication of application:
**21.10.92 Bulletin 92/43**

(84) Designated Contracting States:
**BE DE ES FR GB IT NL SE**

(71) Applicant: **PROCHIND S.p.A.**
**Via Mantova 10**
**Muggio (Milano)(IT)**

(72) Inventor: **Bagnulo, Luigi**
**Via Volta 18**
**Milano(IT)**

(74) Representative: **Raimondi, Alfredo, Dott. Ing.**
**Prof. et al**
**Dott. Ing. Prof. RAIMONDI ALFREDO S.r.l.**
**Piazzale Cadorna 15**
**I-20123 Milano(IT)**

(54) **Tubular coupling with an incorporated electrically isolated flange for metal pipelines and the like.**

(57) The present invention refers to a tubular coupling with an incorporated flange destined to metal pipelines and the like conveying water, gas, air and other fluids; the incorporated flange being electrically isolated so that the tubular coupling allows the joining of said metal pipelines and the like without electrical continuity.

fig. 1

EP 0 509 568 A2

Electrical interruptions on metal pipelines have become a hard-felt necessity, either for technical or safety reasons, as a direct consequence of spontaneous and electrolytic phenomena which affect buried pipelines.

Man has been trying to avoid these phenomena by using suitable coatings on pipelines as well as by inserting insulating joints in order to interrupt the electrical continuity.

The first type of said joints, still in use, is realized by inserting a disc in hard insulating material between two flanges and by further isolating the flanges from the bolts and locking nuts through insulating sleeves and insulating washers.

The sealing between the flanges and the insulating disc is obtained by means of rectangular or annular (in section) gaskets with their housings on the flanges.

This traditional insulating joint has to be positioned within an inspection pit so as to allow for the required maintenance due to inconveniences presented by this joint.

In fact, periodic tightening of the nuts is needed, caused by the giving of various components; very frequently sleeves have to be substituted as a result of a breakage and, finally, the insulating disc has to be cleaned or replaced periodically owing to the shortcircuiting of the joint caused by conductive deposits formed on the internal surfaces of said disc.

The present invention refers to an insulating flange-type tubular coupling, also abbreviated to "insulating flange", which avoids the above-mentioned inconveniences as it can be connected up to a normal flange by means of bolts and nuts, without resorting to the use of insulating discs, sleeves, washers and the like; and especially so to a tubular element provided at one end with a toroidal expansion forcibly and firmly contained by means of insulating material within a collar flange; the other end being free to be connected to the pipeline either through welding in the case of large diameter pipes or welding/screwing in the case of small diameter pipes.

The following description clarifies the above-mentioned and the other characteristics:

Fig. 1     shows a cross-section of this coupling for medium and large diameter pipes.

Fig. 2     shows cross-sections of the several components of the coupling in fig. 1.

Fig. 3     shows a cross-section of a variation of this coupling for small diameter pipes.

Fig. 4     shows cross-sections of the several components of the coupling in fig. 3.

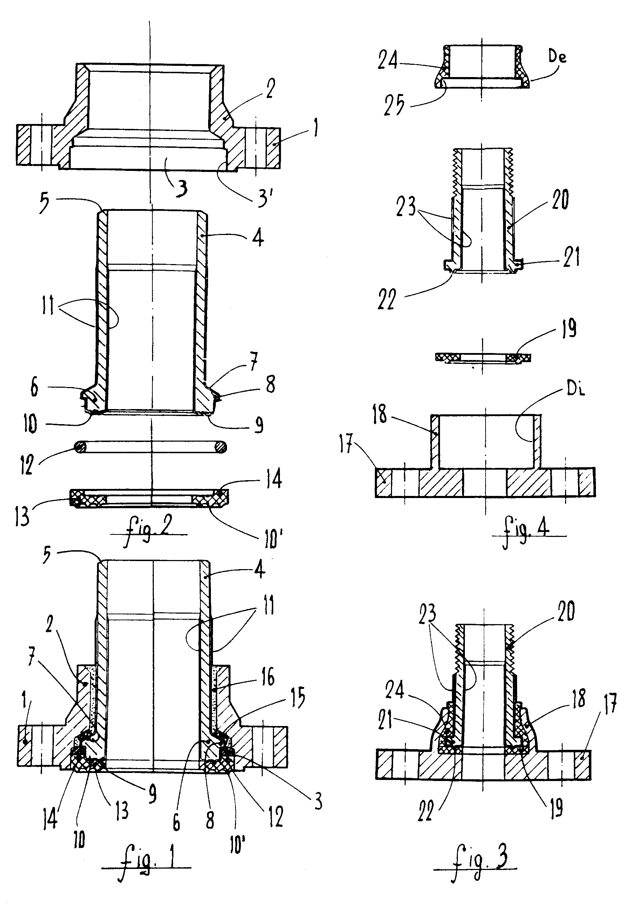

Figures 1 and 2 show a flange 1 with a collar 2 having an internal diameter greater than the external diameter of the pipeline to which the coupling gets connected. Said flange has, starting from its frontal plane, a rebate 3 shaped in such a way as to house one end of tubular element 4 whose external and internal diameters are equal to their respectively corresponding ones on the pipeline to which it gets connected.

This end of said tubular elements 4 terminates in a peripheral cylindrical expansion 6 having its upper facial plane 7 shaped to a truncated cone provided with a short circular projection 8; its lower facial plane 9 can be forseen with circular ridges 10.

Said tubular element 4 has a stretch of its external and internal surface development, including the expansion 6, covered by a cold- or hot-applied insulating coating 11.

The tubular coupling also forsees an insulating toroidal sealing ring 12 having its internal diameter equal to or slightly less than the external diameter of expansion 6 on the tubular element 4 and its external diameter equal to or slightly greater than the internal diameter of rebate 3 on flange 1.

The tubular coupling, furthermore, forsees a ring-shaped element 13 preferably in thermosetting insulating plastic material, with a high resistance to compression, whose internal diameter is equal to that of tubular element 4 and whose upper facial plane bears a peripheral circular projection 14 the internal diameter of which and the external diameter of the whole of the element 13 are such that they may forcibly, and respectively so, be fitted over expansion 6 on tubular element 4 and into rebate 3 on flange 1; the thickness of said circular projection 14 is such that it can forcibly contain the toroidal sealing ring 12 within the annular space formed by the internal surface 3' on flange 1, the external cylindrical surface of expansion 6 and of circular projection 8 thus creating and additional sealing guaranty to that ensured by the connection between lower facial plane 9 of peripheral cylindrical expansion 6 and the opposing surface of the insulating element 13 which can be stuck together through a suitable adhesive.

The lower facial plane of the insulating element 13 may also be provided with annular ridges 10'.

The assemblage of the various components to form the insulating flange, as in figure 1, is executed by

- inserting into collar flange 1 tubular element 4 on whose conical surface 7, pertaining to expansion 6, at least four rigid insulating spacers 15 have previously been fixed at 90° to one another;

- subsequently inserting the toroidal sealing ring 12 between the internal surface 3' on flange 1 and the external surface of the cylindrical projection 6 on tubular element 4;

- then forcibly inserting into the end zone of rebate 3 on flange 1 the element 13 whose annular projection 14 keeps the toroidal sealing ring 12 under compression;

- finally filling, by means of hot- or cold polymerizing resin, the space between the internal surface of collar 2 on flange 1 and the external surface of tubular element 4.

Whenever connecting up this insulating flange to another traditional flange, the element 13 can act as a sealing gasket; a traditional sealing gasket , not shown herein, can also be inserted between the flanges.

The tensile loading obtained by tightening the nut ensures a perfect sealing both between the coupled flanges as well as amongst the components of the insulating flange.

Figures 3 and 4 show a variation in which flange 17 is the common flat type with the welded-on collar 18.

The tubular element 20 has its lower end conformed to an expansion 21, with two facial planes, whose external diameter is less than the internal diameter of collar 18.

The lower facial plane of expansion 21 can also be provided with annular ridges 22.

The upper end of element 20 is threaded or pre-adapted to butt-welding.

A large area of the internal and external surface of said tubular element 20, including the expansion 21, is coated with insulating material 23 whereas it is foreseen that onto tubular element 20 is fitted a sleeve 24, in highly resistant pressed insulating material, whose cylindrical internal surface has a diameter equal to the external diameter of tubular element 20 and whose lower part is provided with a rebate 25 to house the expansion 21 of said tubular element 20.

Said sleeve 24 has at one end an external diameter De slightly greater than the internal diameter Di of collar 18 in such a way that the former can forcibly be inserted into the latter.

The aforementioned diameter De of sleeve 24 is gradually reduced to conform to a profile which is convex for the first stretch followed by a concave stretch.

The total axial length of sleeve 24 is greater than that of collar 18.

The tubular element 20, together with said sleeve 24, is inserted into collar 18, within which an insulating sealing washer 19 has previously been positioned. The collar 18 is then deformed by means of an appropriate pressing die until it forcibly conforms to the external surface of sleeve 24.

Once collar 18 has been deformed, that is, when the coupling presents a perfect locking, said sleeve 24 will protrude to a certain length beyond the edge of said collar 18, keeping it spaced from the external surface of the tubular element 20.

## Claims

1. Tubular coupling with flange for connecting up metal pipes and the like, conveying water, gas, air or other fluids, in which the flange is electrically isolated so that it allows for connecting up pipes and the like thus avoiding electrical continuity. This flange comprises a collar with an internal diameter greater than the external diameter of the pipeline to which the tubular coupling is destined and has, starting from its frontal plane, a rebate (3) shaped so as to house in a detached manner the peripheral cylindrical expansion (6) on one end of a tubular element (4) having an external and internal diameter equal to their respectively corresponding diameters of the pipeline to which said tubular coupling is destined and the other end (5) pre-adapted to butt-welding or the like; the upper facial plane (7) of said expansion (6) being truncatedly conical and terminating in a short circular projection (8), a few rigid insulating spacers (15) being fixed onto said upper facial plane (7); the lower facial plane (9) of said expansion (6) being provided with circular ridges (10); said tubular element (4) being covered by an insulating coating (11) for a stretch of its external and internal surface development including expansion (6); the cylindrical meatus formed by the opposing surfaces of expansion (6) and rebate (3) on flange (1) housing an insulating sealing ring (12) as well as the peripheral circular projection (14) of the upper facial plane on a ring-shaped element (13), in insulating plastic material having a high resistance to compression, whose internal diameter is equal to that of tubular element (4); the lower facial plane of the element (13) being provided with annular ridges (10'); the internal diameter of the aforesaid projection (14) and the external diameter of the whole element (13) being such that they may forcibly, and respectively so, be fitted over expansion (6) on tubular element (4) and inserted into rebate (3) on flange (1); the thickness of said circular projection (14) being such that it can forcibly contain the toroidal sealing ring (12) within the annular space formed by the internal surface (3') on flange (1), the external cylindrical surface of expansion (6) and of circular projection (8), thus creating an additional sealing guaranty; the space between the internal surface of collar (2) on flange (1) and the external surface of the tubular element (4) being filled with polymerizing resin.

2. Tubular coupling with flange as in claim 1 characterized by the fact that for small diameter pipes the isolated flange (17) may also be of the normal flat type with a welded-on collar (18); the tubular element (20) having its lower end conformed to an expansion, with two facial planes, whose external diameter is less than the internal diameter of the collar (18); the lower facial plane of expansion (21) being with or without annular ridges (22); the upper end of the tubular element (20) being threaded or pre-adapted to butt-welding; a large area of the internal and external surface of said tubular element (20), including the expansion (21), being coated with insulating material (23); the polymerizing resin filler being substituted by sleeve (24), in pressed insulating material highly resistant to compression, having an external surface with an external diameter De gradually and axially reduced to conform to a profile which is convex for the first stretch followed by a concave stretch; the total axial length of sleeve (24) being greater than that of collar (18); said sleeve (24) having its cylindrical internal surface with a diameter equal to the external diameter of the tubular element (20) and bearing a rebate (25) to house the expansion (21) of said tubular element (20); the tubular element (20) together with said sleeve (24) being inserted into collar (18) within which a sealing washer (19) has previously been positioned; the collar (18) finally deformed, by means of an appropriate pressing-die until it forcibly conforms to the external surface of sleeve (24) so that the latter is forcibly contained within collar (18); said sleeve (24) protruding for a few millimeters to beyond the edge of collar (18) once the latter has been deformed.

3. Tubular coupling with flange as in claim 1 characterized by the fact that the lower facial plane of plastic element (13) as well as the lower facial plane (9) of expansion (6) may be without their respective circular ridges (10' and 10).

4. Tubular coupling with flange as in claim 1 characterized by the fact that the lower facial plane of the rigid plastic element (13) has a superficial layer within the range of a millimeter thick capable of acting as sealing gasket or is provided with one or more annular grooves to house sealing rings.

5. Tubular coupling with flange as in previous claims characterized by the fact that the flange can also be in cast-iron, apart from being in steel, to isolate cast-iron pipelines from steel pipelines.

6. Tubular coupling with flange as in previous claims characterized by the fact that the rebate (3) on flange (1) as well as the expansion (6) on element (4) may have different shapes as long as their opposing surfaces create a meatus of a few millimeters capable of containing an elastomeric sealing element.

7. Tubular coupling with flange as in claim 1 characterized by the fact that the tubular element (20) may also be in copper with its free bell-shaped end to be connected up to a copper pipe by means of brasing.

fig. 2

fig. 4

fig. 1

fig. 3